# FASCICULE DE BREVET EUROPEEN

(11) **EP 4 164 933 B1**
(45) Date de publication et mention de la délivrance du brevet: **01.01.2025**
(21) Numéro de dépôt: 21731773.4
(22) Date de dépôt: 09.06.2021
(51) Int. Cl.: B61B 12/06

(54) **PROCÉDÉ ET DISPOSITIF DE CONTRÔLE D'UNE INSTALLATION DE TRANSPORT PAR CÂBLE ET INSTALLATION COMPRENANT UN TEL DISPOSITIF DE CONTRÔLE**
VERFAHREN UND VORRICHTUNG ZUR STEUERUNG EINES KABELTRANSPORTSYSTEMS UND SYSTEM MIT SOLCH EINER STEUERUNGSVORRICHTUNG
METHOD AND DEVICE FOR CONTROLLING A CABLE TRANSPORT SYSTEM AND SYSTEM COMPRISING SUCH A CONTROL DEVICE

(30) Priorité: 10.06.2020 FR 2006076
(43) Date de publication de la demande: 19.04.2023
(73) Titulaire: POMA, 38340 Voreppe (FR)
(72) Inventeur: SÈVE, Clémence, 38380 Saint Laurent du Pont (FR); MATHIEU, Christian, 38180 Seyssins (FR)
(74) Mandataire: Talbot, Alexandre
(86) Numéro de dépôt international: PCT/EP2021/065533
(87) Numéro de publication internationale: WO 2021/250132

(56) Documents cités:
- EP-A1- 0 461 954
- WO-A1-2015/082834
- FR-A1- 2 900 118
- FR-A1- 2 941 206
- FR-A1- 2 996 514
- FR-B1- 2 900 118
- JP-A- 2008 001 180

## Description

### Domaine technique

L'invention concerne un dispositif de contrôle d'une installation de transport par câble, une installation de transport par câble comprenant un tel dispositif de contrôle et un procédé de contrôle d'une installation de transport par câble.

### État de la technique

Les installations de transport par câble, en particulier les installations qui transportent des personnes, comportent des véhicules tractés par un câble, dit câble tracteur, qui cheminent d'une gare d'embarquement/débarquement de passagers, à l'autre. L'installation comporte généralement des pylônes pour guider et supporter le câble tracteur. Ces pylônes sont placés le long du cheminement des véhicules. Il arrive, de manière exceptionnelle, que des véhicules se retrouvent bloqués sur un pylône, et plus dangereusement que plusieurs véhicules se percutent au niveau d'un même pylône. Il est donc nécessaire de pouvoir contrôler le bon cheminement des véhicules au passage d'un pylône.

On peut citer la demande de brevet français FR2996514 qui divulgue un procédé de contrôle d'un déplacement de véhicules au sein d'une gare d'un télésiège, ou d'une télécabine, dans lequel on détermine une distance de séparation entre deux véhicules à partir d'une détermination des positions des véhicules, dans une zone de la gare, et on modifie la vitesse de déplacement si la distance de séparation est inférieure à une distance de sécurité. Mais on doit calculer les distances qui varient, ce qui rend le procédé complexe à mettre en oeuvre.

On peut citer la demande de brevet allemand DE 102017219219, qui divulgue des cabines tractées par un câble se déplaçant sur un rail. Les cabines sont équipées de capteurs communiquant avec des appareils positionnés sur des pylônes, pour réguler la distance entre cabines ou la vitesse des cabines à proximité d'éléments de l'installation. On peut également citer la demande de brevet européen EP2977286, qui divulgue un procédé de récupération de mesures réalisées avec un capteur de mesure situé sur le parcours d'un véhicule, dans lequel le véhicule comprend une étiquette radiofréquence à identifiant unique. On récupère les mesures au niveau de l'étiquette lors du passage du véhicule à proximité du capteur, puis on récupère les mesures au niveau d'un lecteur radiofréquence situé dans une gare. Mais ces procédés ne permettent pas de contrôler le bon cheminement des véhicules entre deux gares.

On peut en outre citer la demande de brevet français FR2941206 qui divulgue un dispositif de contrôle du cheminement de véhicules dans une gare d'une installation de transport par câble. Lorsque les véhicules sont désaccouplés du câble et guidés sur des rails, le dispositif de contrôle du cheminement émet des signaux à chaque fois qu'un véhicule est détecté par un moyen de détection monté fixe. Deux moyens de détections définissent l'entrée et la sortie d'une zone de contrôle. Lorsqu'un moyen de détection détecte l'entrée d'un véhicule dans la zone de contrôle, un compteur est activé pour suivre le déplacement du câble jusqu'à ce que le véhicule soit détecté en sortie de la zone de contrôle. La valeur du compteur est comparée à un seuil pour détecter une défaillance. Le seuil est fonction du débit de l'installation en véhicules, du rayon de courbure de l'installation, de l'encombrement des véhicules, du rapport de réduction entre la vitesse de déplacement du câble et la vitesse d'entrainement des véhicules désaccouplés.

Un autre compteur est divulgué qui représente la longueur de câble entre deux détections de deux véhicules consécutifs par un même capteur afin de suivre la distance séparant les deux véhicules consécutifs. Pour détecter une défaillance, cet autre compteur est comparé à un autre seuil qui est fonction de la vitesse du câble et/ou du débit de circulation des véhicules.

### Exposé de l'invention

Un objet de l'invention consiste à pallier ces inconvénients, et plus particulièrement à fournir des moyens pour contrôler le bon cheminement des véhicules tractés par un câble et notamment le franchissement de points de contrôle.

Un autre objet consiste à fournir un moyen de contrôle simple et robuste.

Selon un aspect de l'invention, il est proposé un procédé de contrôle d'une installation de transport par câble, l'installation comprenant un véhicule apte à être tracté par un câble, le procédé comprenant : une détection d'une entrée du véhicule dans une zone de cheminement, un calcul d'une variable représentative d'une longueur de défilement du câble, et une comparaison de la variable calculée avec un seuil.

Le procédé comprend une détermination d'une réception d'un événement indiquant une sortie du véhicule de la zone de cheminement, et après que la variable calculée a atteint le seuil, une émission d'un signal de défaillance si l'événement n'est pas reçu et/ou comporte la réinitialisation de la variable en réponse à une réception d'un événement indiquant une sortie du véhicule hors de la zone de cheminement, la variable n'ayant pas atteint le seuil.

Ainsi, on fournit un procédé simple pour déterminer si un véhicule a bien franchi une zone de cheminement spécifique. La zone de cheminement peut être située entre deux gares. Le procédé est également adapté pour une zone de cheminement située au sein d'une des gares.

L'installation peut comprendre des moyens de mesure configurés pour fournir des impulsions en fonction d'un déplacement du câble, et le calcul comporte un calcul de la variable à partir des impulsions fournies par les moyens de mesure.

L'installation peut également comprendre des moyens de détection aptes à émettre un premier signal indiquant une entrée du véhicule dans la zone de cheminement et aptes à émettre un deuxième signal indiquant une sortie du véhicule de la zone de cheminement, et l'événement correspond à la réception du deuxième signal.

Le seuil peut être déterminé en fonction d'une longueur de la zone de cheminement.

Selon un autre aspect, il est proposé un dispositif de contrôle d'une installation de transport par câble, l'installation comprenant un véhicule apte à être tracté par un câble, le dispositif comprenant : des moyens de détection d'une entrée du véhicule dans une zone de cheminement, des moyens de calcul d'une variable représentative d'une longueur de défilement du câble, et des moyens de comparaison de la variable calculée avec un seuil.

Le dispositif comprend des moyens de détermination configurés pour déterminer une réception d'un événement indiquant une sortie du véhicule de la zone de cheminement, le dispositif de contrôle étant configuré pour émettre un signal de défaillance après que la variable calculée a atteint le seuil et que l'événement n'est pas reçu et/ou pour réinitialiser la variable en réponse à une réception d'un événement indiquant une sortie du véhicule hors de la zone de cheminement, la variable n'ayant pas atteint le seuil.

Le dispositif peut comprendre des moyens de mesure configurés pour fournir des impulsions en fonction d'un déplacement du câble, et les moyens de calcul calculent la variable à partir des impulsions fournies par les moyens de mesure. Les moyens de détection peuvent être aptes à émettre un premier signal indiquant une entrée du véhicule dans la zone de cheminement et aptes à émettre un deuxième signal indiquant une sortie du véhicule de la zone de cheminement, et les moyens de détermination comprennent un récepteur des premier et deuxième signaux, et l'événement correspond à la réception du deuxième signal.

Les moyens de comparaison peuvent déterminer le seuil en fonction d'une longueur de la zone de cheminement.

Selon un autre aspect, il est proposé une installation de transport par câble, comprenant un câble, un véhicule apte à être tracté par le câble, et un dispositif de contrôle tel que défini ci-avant.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une installation de transport par câble équipée d'un dispositif de contrôle selon l'invention ;
- la figure 2, illustre schématiquement une première étape d'un procédé de contrôle selon l'invention ;
- la figure 3, illustre schématiquement une deuxième étape d'un procédé de contrôle selon l'invention ;
- la figure 4, illustre schématiquement une troisième étape d'un procédé de contrôle selon l'invention ; et
- la figure 5, illustre schématiquement une quatrième étape d'un procédé de contrôle selon l'invention.

### Description détaillée

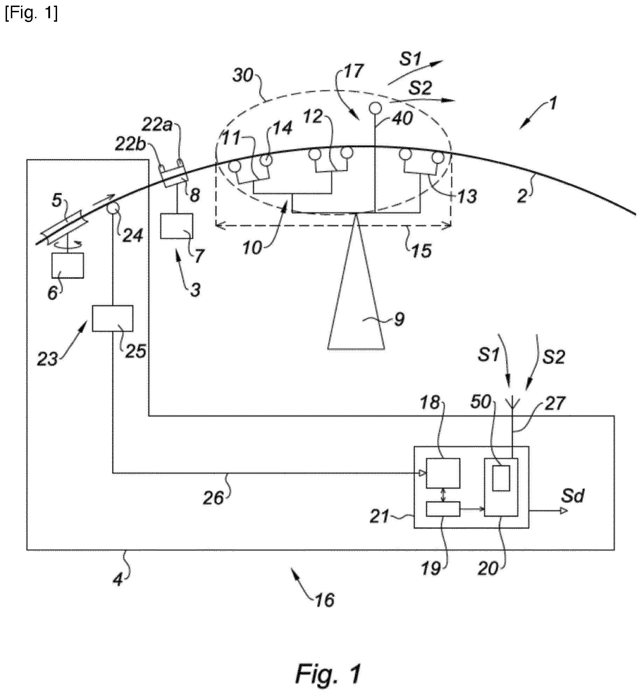

Sur la figure 1, on a représenté une installation de transport 1 par câble, comprenant un câble 2 et un ou plusieurs véhicules 3 aptes à être tractés par le câble 2. L'installation 1 comporte une gare 4 d'embarquement et de débarquement de passagers dans le ou les véhicules 3. L'installation 1 comprend une poulie d'entraînement 5 du câble 2. La poulie d'entraînement 5 est animée en rotation par un moteur 6. Les véhicules 3 aptes à transporter des personnes comprennent respectivement une cabine 7, ou un siège, attaché au câble 2, par l'intermédiaire d'une pince 8. La pince 8 peut s'ouvrir et se fermer pour attacher les véhicules 3 de manière amovible au câble 2, et l'installation 1 est du type débrayable. En variante, la pince 8 peut être fixe pour attacher les véhicules 3 de manière permanente au câble 2, et l'installation est du type non débrayable.

L'installation 1 comporte en outre un ou plusieurs pylônes 9 pour maintenir le câble 2 au-dessus du sol. Le pylône 9 comporte généralement un balancier 10 comprenant une ou plusieurs poutres 11 à 13 équipées de galets 14 montés à rotation pour guider et permettre le déplacement du câble 2. Les véhicules 3 sont tractés par le câble 2 et franchissent le pylône 9 pour aller d'une gare 4 à l'autre. L'installation 1 comporte au moins une zone de cheminement 15 dans laquelle on souhaite contrôler le passage des véhicules 3. Sur les figures 1 à 5, on a représenté une installation 1 comprenant une zone de cheminement 15. Une zone de cheminement 15 peut correspondre à un espace compris entre les deux extrémités du balancier 10. Par exemple, la longueur de la zone de cheminement 15 est égale à une longueur du balancier 10. L'installation 1 peut également comprendre plusieurs zones de cheminement 15 situées le long du parcours des véhicules 3, c'est-à-dire entre deux gares 4. Une ou plusieurs zones de cheminement 15 peuvent également être situées au sein d'une gare 4. En outre, deux zones de cheminement successives peuvent être adjacentes ou éloignées l'une de l'autre.

Plus particulièrement, l'installation 1 comporte un dispositif de contrôle 16 pour contrôler le cheminement du ou des véhicules 3 dans la zone de cheminement 15. De façon générale, le dispositif de contrôle 16 comporte une unité de commande électronique 21. Le dispositif de contrôle 16 permet de vérifier si un véhicule 3 a correctement franchi la zone de cheminement 15. En d'autres termes, le dispositif de contrôle 16 contrôle si un véhicule 3 n'est pas bloqué dans la zone de cheminement 15 pour éviter toute collision entre le véhicule bloqué et un autre véhicule. Les véhicules 3 sont accrochés au câble 2 dans la zone de cheminement 15.

Le dispositif de contrôle 16 comprend des moyens de détection 17, des moyens de calcul 18, des moyens de comparaison 19 et des moyens de détermination 20. Par exemple, les moyens de calcul 18, les moyens de comparaison 19 et les moyens de détermination 20 sont des circuits logiques intégrés au sein de l'unité de commande électronique 21.

Les moyens de détection 17 sont configurés pour détecter une entrée du véhicule 3 dans la zone de cheminement 15 du véhicule 3. De façon générale, les moyens de détection 17 sont aptes à émettre un premier signal S1 indiquant une entrée du véhicule 3 dans une zone de cheminement 15 et aptes à émettre un deuxième signal S2 indiquant une sortie du véhicule 3 de la zone de cheminement 15. Les moyens de détection sont formés par des détecteurs. Par exemple, les moyens de détection 17 comportent un ou plusieurs capteurs 40, 41 de présence d'un véhicule 3. Les capteurs 40, 41 de présence sont configurés pour émettre respectivement les premier et deuxième signaux S1, S2. Par exemple, les capteurs 40, 41 sont des lecteurs d'étiquettes radiofréquence. Dans ce cas, les pinces 8 des véhicules 3 sont équipées d'une ou deux étiquettes radiofréquence 22a, 22b. Par exemple, un capteur 40, 41 peut comprendre un émetteur de signaux intégré pour émettre les premier et deuxième signaux S1, S2. En variante, deux capteurs 40, 41 peuvent être connectés à un même émetteur distant pour émettre les premier et deuxième signaux S1, S2. Les détecteurs sont configurés pour détecter la présence d'un véhicule et émettre un signal représentatif de cette détection. Lorsque les moyens de détection, par exemple au moyen du au moins un capteur 40, détectent l'entrée du véhicule 3 dans la zone de cheminement 15, ils émettent un signal ce qui permet au dispositif de contrôle 16 de connaitre la position réelle et précise du véhicule 3 dans l'installation de transport par câble 1.

Les moyens de détection 17 peuvent comprendre un capteur 40 ayant une zone de détection 30. Lorsque le véhicule 3 entre dans la zone de détection 30, le capteur 40 émet le premier signal S1 indiquant une entrée du véhicule 3 dans la zone de cheminement 15. Lorsque le véhicule 3 sort de la zone de détection 30, le capteur 40 émet le deuxième signal S2 indiquant une sortie du véhicule 3 de la zone de cheminement 15. Le capteur 40 possède une zone de détection 30 qui s'étend sur toute la longueur de la zone de cheminement 15 ce qui permet d'utiliser un seul capteur 40.

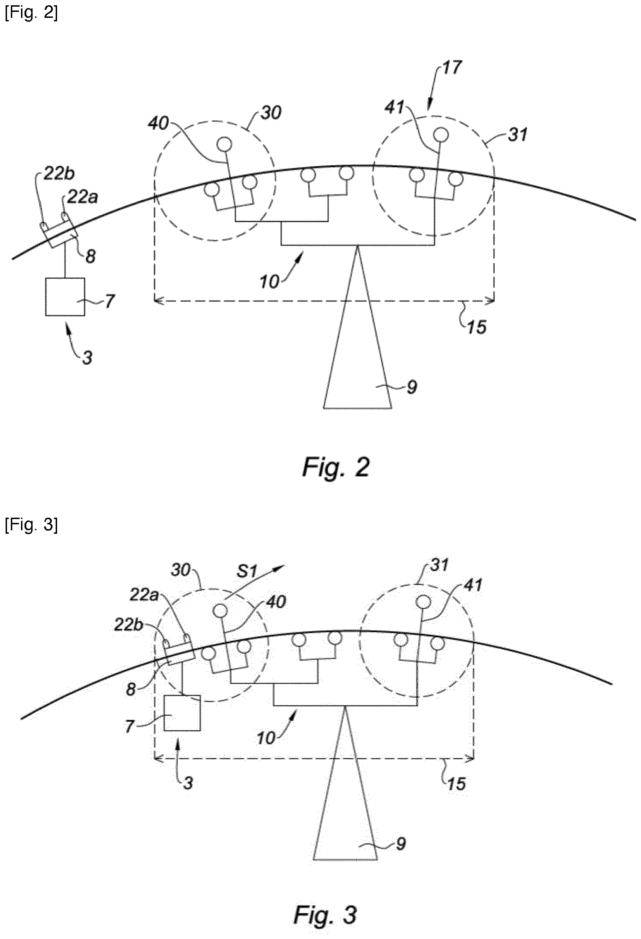

En variante, comme illustré sur les figures 2 à 5, les moyens de détection 17 comprennent deux capteurs 40, 41 ayant chacun une zone de détection 30, 31 respective. Lorsque le véhicule 3 entre dans la première zone de détection 30, le premier capteur 40 émet le premier signal S1 indiquant une entrée du véhicule 3 dans la zone de cheminement 15. Lorsque le véhicule 3 sort de la deuxième zone de détection 31, le deuxième capteur 41 émet le deuxième signal S2 indiquant une sortie du véhicule 3 de la zone de cheminement 15. Un capteur 40 est présent à l'entrée de la zone de cheminement 15 pour détecter l'entrée du véhicule 3 dans la zone de cheminement 15. Un capteur 41 est présent à la sortie de la zone de cheminement 15 pour détecter la sortie du véhicule 3 hors de la zone de cheminement 15.

De manière générale, on associe à chaque zone de cheminement 15, une entrée dans la zone de cheminement 15 et une sortie de la zone de cheminement 15. En outre, on peut utiliser un capteur 40 par zone de cheminement 15. Le capteur 40 est configuré pour détecter un passage d'un véhicule 3 au niveau de l'entrée dans la zone de cheminement 15, et le capteur 40 émet le premier signal S1. Le capteur 40 est également configuré pour détecter un passage d'un véhicule 3 au niveau de la sortie de la zone de cheminement 15, et le capteur 40 émet le deuxième signal S2. En variante, on peut utiliser deux capteurs 40, 41 associés à une zone de cheminement 15. Dans ce cas, un premier capteur 40 est configuré pour détecter un passage d'un véhicule 3 au niveau de l'entrée dans la zone de cheminement 15, et le premier capteur 40 émet le premier signal S1. Le deuxième capteur 41 est configuré pour détecter un passage d'un véhicule 3 au niveau de la sortie de la zone de cheminement 15, et le deuxième capteur 41 émet le deuxième signal S2. Selon encore une autre variante, on peut utiliser deux capteurs 40, 41 associés à une zone de cheminement 15, et configurés pour détecter respectivement un passage d'un véhicule 3 au niveau de l'entrée dans la zone de cheminement 15 et un passage d'un véhicule 3 au niveau de la sortie de la zone de cheminement 15. Les deux capteurs 40, 41 peuvent être reliés à un même émetteur apte à émettre les premier et deuxième signaux S1, S2, ou chaque capteur 40, 41 comporte un émetteur de signaux intégré. Selon encore une autre variante, on peut associer un capteur 40 à plusieurs zones de cheminement 15. Dans ce cas, la zone de détection 30 du capteur 40 couvre l'ensemble des zones de cheminement 15, en particulier l'entrée de la première zone de cheminement et la sortie de la dernière zone de cheminement. Dans ce cas, le capteur 40 est configuré pour détecter un passage d'un véhicule 3 au niveau de l'entrée dans chaque zone de cheminement 15 et pour émettre un premier signal S1 associé à chaque entrée dans une zone de cheminement détecté. En outre, le capteur 40 est configuré pour détecter le passage d'un véhicule 3 au niveau de la sortie de chaque zone de cheminement et pour émettre un deuxième signal S2 associé à chaque sortie d'une zone de cheminement 15 détectée.

Les moyens de calcul 18, par exemple un calculateur, tel un microprocesseur, sont configurés pour calculer une variable représentative d'une longueur de défilement du câble 2. Par exemple, le dispositif de contrôle 16 peut comporter des moyens de mesure 23, par exemple un dispositif de mesure, configurés pour fournir des impulsions en fonction d'un déplacement du câble 2. Les moyens de mesure 23 peuvent comprendre une roue mobile codeuse 24 en contact du câble 2 reliée à un générateur d'impulsion 25. Lorsque le câble 2 est animé en translation, par la poulie d'entrainement 5, la roue mobile codeuse 24 tourne et le générateur d'impulsion 25 génère une impulsion en fonction de la rotation de la roue mobile codeuse 24. Par exemple, le générateur 25 génère une impulsion à chaque tour de la roue mobile codeuse 24. En d'autres termes, le générateur d'impulsion 25 génère des impulsions à chaque défilement du câble 2, lorsque ce dernier est en mouvement. En particulier, le générateur d'impulsion 25 est connecté aux moyens de calcul 18, par une connexion 26. Les moyens de calcul 18 sont configurés pour calculer la variable à partir des impulsions fournies par les moyens de mesure 23. En d'autres termes, la variable calculée correspond à un nombre d'impulsions générées par le générateur d'impulsions 25. En alternative, les moyens de mesure 23 sont configurés pour mesurer la rotation de la poulie d'entrainement 5 assurant l'entrainement du câble 2 de manière à déterminer la progression du câble 2.

Les moyens de calcul 18 fournissent une variable qui est représentative de la longueur de défilement du câble 2 à partir du moment où le véhicule 3 a été détecté à l'entrée d'une zone de cheminement 15. De manière préférentielle, les moyens de calcul 18 sont configurés pour calculer une nouvelle variable à chaque fois qu'un véhicule 3 entre dans une nouvelle zone de cheminement 15. Par exemple, à réception du signal indiquant l'entrée du véhicule 3 dans la zone de cheminement 15, les moyens de calcul 18 calculent une variable représentative d'une longueur de défilement du câble 2. La variable représentative d'une longueur de défilement du câble 2 permet de calculer le cheminement du véhicule 3 le long de l'installation de transport par câble 1 en fonction du temps et donc de calculer une position théorique du véhicule 3 à partir du cheminement du câble 2.

Avantageusement, les moyens de calcul 18 sont des moyens de calcul d'une variable à partir de la longueur de câble 2 qui a défilé et non à partir de la vitesse du câble 2. La variable étant calculée à partir de la longueur de câble 2 qui a défilé depuis la détection, la mesure est plus précise. La variable permet d'estimer la position du véhicule 3 qui est considéré maintenu de manière immobile par rapport au câble 2. Lorsque les moyens de détection, par exemple au moyen du au moins un capteur 40, détectent la sortie du véhicule 3 hors de la zone de cheminement 15, ils émettent un signal ce qui permet au dispositif de contrôle 16 de connaitre la position réelle précise du véhicule 3 dans l'installation de transport par câble 2.

Les moyens de comparaison 19, par exemple un comparateur, sont configurés pour comparer la variable calculée avec un seuil. Avantageusement, les moyens de comparaison 19 déterminent le seuil en fonction d'une longueur de la zone de cheminement 15. Par exemple, la longueur de la zone de cheminement 15 peut être égale à la longueur totale du balancier 10 ou à la longueur d'une partie du balancier 10. En particulier, le seuil correspond à une longueur spécifique de défilement du câble 2 correspondant à la longueur de la zone de cheminement 15.

Les moyens de détermination 20, par exemple un calculateur, sont configurés pour déterminer une réception d'un événement indiquant une sortie du véhicule 3 de la zone de cheminement 15. Par exemple, les moyens de détermination 20 comprennent un récepteur 27, par exemple une antenne, configuré pour recevoir les premier et deuxième signaux S1, S2. L'événement indiquant une sortie du véhicule 3 de la zone de cheminement 15 correspond à la réception du deuxième signal S2. Au contraire, si le véhicule 3 ne sort pas de la zone de cheminement 15, par exemple s'il se retrouve bloqué dans la zone de cheminement 15, alors le deuxième signal S2 n'est pas émis par les moyens de détection 17, et le deuxième signal S2 n'est pas reçu par les moyens de détermination 20. Avantageusement, les moyens de détermination 20 comportent une mémoire 50 pour stocker les signaux S1, S2 reçus par le récepteur 27. Les moyens de détermination 20 interrogent de façon périodique la mémoire 50 pour déterminer la réception du deuxième signal S2. La période d'interrogation peut être égale ou inférieure au nombre maximal d'impulsions par seconde générées par le générateur d'impulsions 25.

De manière avantageuse, la position réelle du véhicule 3 peut être comparée à la position estimée à partir de la variable représentative d'une longueur de défilement du câble 2. Si les deux positions sont différentes, c'est-à-dire que la différence entre les deux positions est supérieure à une valeur seuil, alors un signal de défaillance est émis. Lorsque la différence entre les deux positions est inférieure à la valeur seuil voire nulle, aucun signal de défaillance n'est envoyé.

La variable représentative d'une longueur de défilement du câble est comparée à une valeur seuil. La valeur seuil correspond à la longueur maximale de déplacement du véhicule 3 pour obtenir le passage de ce véhicule 3 par la position de sortie de la zone de cheminement. La position de la sortie de la zone de cheminement par rapport à l'entrée de la zone de cheminement est représentée par la valeur seuil.

Lorsque les moyens de comparaison 19 comparent régulièrement la valeur de la variable représentative d'une longueur de défilement du câble à la valeur seuil, le dispositif de contrôle 16 vérifie que le véhicule se trouve entre l'entrée et la sortie de la zone de cheminement 15. Lorsque les moyens de comparaison 19 constatent que la valeur de la variable représentative d'une longueur de défilement du câble atteint la valeur seuil, il est important de vérifier si le dispositif de détection détecte ou à déjà détecté la présence du véhicule dans la zone de sortie de la zone de défilement 15.

De préférence, on utilise le dispositif de contrôle 16 de la manière suivante. Lorsqu'on détecte une entrée du véhicule 3 dans la zone de cheminement 15, par exemple lorsque les moyens de détermination 20 reçoivent le premier signal S1, on calcule la variable représentative d'une longueur de défilement du câble 2. Puis, tandis que le véhicule 3 tracté par le câble 2 parcourt la zone de cheminement 15, on compare la variable avec le seuil. Préférentiellement, on compare périodiquement la variable avec le seuil. Puis, lorsque la variable atteint le seuil, on détermine si on a reçu l'événement indiquant une sortie du véhicule 3 de la zone de cheminement 15. On peut alors considérer deux situations. Soit on a reçu l'événement, dans ce cas le véhicule 3 a correctement franchi la zone de cheminement 15. En particulier, on considère que le véhicule 3 a franchi la zone de cheminement 15 avec une longueur attendue de défilement du câble 2. Soit on n'a pas reçu l'événement, et dans ce cas le véhicule 3 est bloqué dans la zone de cheminement 15, ou le véhicule 3 s'est décroché du câble 2. Si l'événement n'est pas reçu, alors que la variable calculée a atteint le seuil, le dispositif de contrôle 16 est configuré pour émettre un signal de défaillance Sd. En d'autres termes, on considère que le véhicule 3 n'a pas correctement franchi la zone de cheminement 15 après que la variable calculée a atteint le seuil et que l'événement n'est pas reçu, c'est-à-dire que le deuxième signal S2 n'est pas reçu. Lorsque le signal de défaillance Sd est émis, on peut ralentir le défilement du câble 2, ou on peut également l'arrêter.

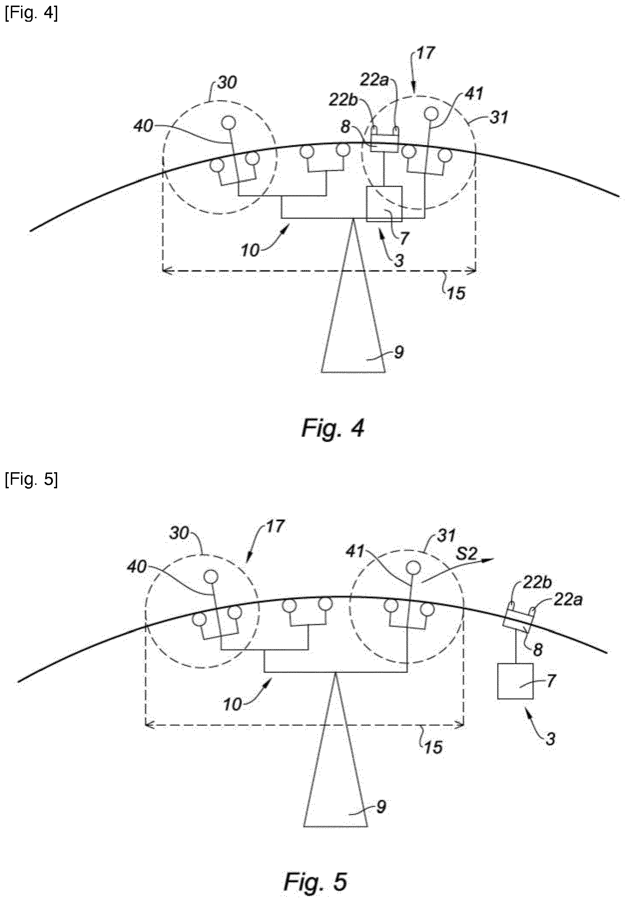

Sur la figure 2, on a représenté le cheminement d'un véhicule 3 à l'approche du pylône 9. Le véhicule 3 est en dehors de la zone de cheminement 15. Sur la figure 3, on a représenté une entrée du véhicule 3 dans la zone de cheminement 15. Dans ce cas, le premier capteur 40 émet le premier signal S1 indiquant que le véhicule 3 est entré dans la zone de cheminement 15. Par exemple, le premier signal S1 est émis lorsqu'une première étiquette 22a du véhicule est présente dans la première zone de détection 30. Sur la figure 4, on a représenté le véhicule 3 se déplaçant au sein de la zone de cheminement 15. En particulier, le véhicule 3 entre dans une deuxième zone de détection 31 du deuxième capteur 41. Sur la figure 5, le véhicule 3 sort de la zone de cheminement 15, et le deuxième capteur 41 émet le deuxième signal S2. Par exemple, le deuxième signal S2 est émis lorsqu'une deuxième étiquette 22b du véhicule 3 quitte la deuxième zone de détection 31.

L'invention qui vient d'être décrite permet de déterminer simplement et avec précision qu'un véhicule a correctement franchi une zone de franchissement. On peut ainsi limiter les collisions entre véhicules dans la zone de franchissement, et ainsi limiter les cas d'accidents graves.

Dans un mode de réalisation où la zone de cheminement 15 est suivie par un seul capteur 40, le premier signal S1 est un signal d'entrée du véhicule dans la zone de cheminement 15, par exemple un front montant ou descendant d'une grandeur. Le deuxième signal S2 est un signal de sortie du véhicule hors de la zone de cheminement 15, par exemple un front descendant ou un front montant de ladite grandeur. La grandeur est préférentiellement une grandeur électrique, par exemple un courant ou une tension. Lorsque deux capteurs 40, 41 sont utilisés pour délimiter la zone de cheminement 15, les signaux S1 et S2 peuvent être deux fronts montants ou deux front descendants ou un front montant et un front descendant ou d'autres formes de signaux.

La détection d'un véhicule 3 à l'entrée d'une zone de cheminement 15 au moyen du premier capteur 40 déclenche le calcul de la variable représentative d'une longueur de défilement du câble 2. En d'autres termes, les moyens de calcul 18 calculent une variable qui représente la longueur de câble 2 qui chemine dans la zone de cheminement 15 à partir du moment où l'on détecte le véhicule 3 à l'entrée de la zone de cheminement 15. La longueur de câble 2 qui chemine dans la zone de cheminement 15 est représentative de la position théorique du véhicule 3 dans la zone de cheminement 15 en direction de la sortie. L'évolution de la variable représente le déplacement du câble 2 et traduit le déplacement théorique du véhicule 3 dans la zone de cheminement 15.

Les moyens de comparaison 19 sont configurés pour comparer la variable représentative d'une longueur de défilement du câble 2 avec la valeur seuil qui est représentative de la longueur de la zone de cheminement. Le seuil représente la longueur maximale autorisée de cheminement de câble 2 à travers la zone de cheminement 15 avant de considérer qu'il s'agit d'une situation anormale.

Lorsque les moyens de comparaison 19 comparent la variable représentative d'une longueur de défilement du câble 2 avec le seuil représentatif de la longueur de la zone de cheminement 15, les moyens de comparaison 19 comparent la position théorique du véhicule 3 par rapport à la position représentant la limite de sortie de la zone de cheminement 15. Lorsque la variable représentative d'une longueur de défilement du câble 2 atteint la valeur seuil cela signifie que la position théorique du véhicule 3 correspond à une sortie hors de la zone de cheminement 15 et préférentiellement à un véhicule 3 qui se trouve légèrement après la sortie de la zone de cheminement 15. Afin de tenir compte des aléas de mesure, la valeur seuil est légèrement plus importante que la longueur stricte de câble 2 dans la zone de cheminement 15.

Lorsque la variable représentative d'une longueur de défilement du câble 2 atteint la valeur seuil, le dispositif de contrôle 16 peut interroger le dispositif de détermination 20 afin de savoir si on a déterminé la réception d'un événement indiquant une sortie du véhicule 3 hors de la zone de cheminement 15. Dans un autre cas de figure, lorsque les moyens de détermination 20 déterminent la réception d'un événement indiquant une sortie du véhicule 3 de la zone de cheminement 15, ils préviennent directement le dispositif de contrôle 16.

Lorsque le dispositif de contrôle 16 détecte que la variable représentative d'une longueur de défilement du câble 2 atteint la valeur seuil et qu'il n'existe pas un évènement représentatif de la sortie du véhicule 3 hors de la zone de cheminement, un signal de défaillance Sd est émis. La position réelle du véhicule 3 s'est éloignée de la position théorique d'une distance suffisante pour être considérée comme anormale.

Lorsque le circuit de contrôle détermine que le véhicule 3 a quitté la zone de cheminement 15 avant que la longueur utilisée de câble 2 représentative d'une défaillance soit atteinte (le seuil), la situation peut être considérée comme normale et ne nécessite pas l'émission du signal de défaillance Sd.

Dans un mode de réalisation particulier, la comparaison est arrêtée lorsque le capteur 40 détecte la sortie du véhicule hors de la zone de cheminement. En conséquence, lorsque les moyens de comparaison comparent la variable représentative d'une longueur de défilement du câble 2 avec le seuil représentatif de la longueur de câble dans la zone de cheminement et détectent que la variable atteint la valeur seuil cela correspond implicitement à la non-réception d'un événement indiquant une sortie du véhicule 3 de la zone de cheminement 15. A l'inverse, lorsque événement indiquant une sortie du véhicule est reçu avant que la variable atteigne la valeur seuil cela arrête le comparateur qui peut être utilisé pour le suivi d'un nouveau véhicule dans la zone de cheminement ou pour le suivi du véhicule dans une autre zone de cheminement ou encore d'autres possibilités.

Le capteur en entrée d'une zone de cheminement permet de définir une première position du véhicule 3 sur le câble 2. Le capteur en sortie de la zone de cheminement 15 permet de définir une deuxième position du véhicule sur le câble 2. La position réelle déterminée par le au moins un capteur en sortie de zone de cheminement est comparée à la position estimée définie par la variable représentative d'une longueur de défilement du câble 2. Selon le résultat de la comparaison, les deux positions sont considérées comme identiques ou différentes ce qui permet d'identifier une situation normale ou une défaillance.

L'utilisation d'une variable représentative de la longueur de câble parcourue dans la zone de cheminement à partir de la détection d'un véhicule à l'entrée de la zone de cheminement est particulièrement avantageuse. Cela permet de suivre la longueur de câble 2 écoulée indépendamment de la vitesse, d'arrêts éventuels de l'installation ou encore de la forme de la zone de cheminement 15.

La comparaison de la variable à une valeur seuil permet de suivre la position estimée du véhicule 3 par rapport à une position de référence correspondant à la position de sortie hors de la zone de cheminement. La comparaison permet de déterminer si le véhicule s'est décalé de sa position de référence au-delà d'une distance seuil représentative d'une défaillance.

Le dispositif de contrôle 16 est configuré pour éviter la collision entre véhicules 3 en contrôlant la position de chaque véhicule 3 par rapport à sa position de référence, c'est-à-dire sa position théorique sur le câble 2. La position de référence est redéfinie à l'entrée de chaque zone de cheminement 15 ce qui permet de minimiser voire supprimer des aléas de mesure par exemple liés à une évolution de la charge appliquée sur un balancier. Selon la charge appliquée au balancier, ce dernier peut se déformer entre une position « à plat » et une position « arrondie ». La longueur de câble nécessaire pour parcourir un balancier est plus courte quand le balancier est « à plat » plutôt que quand le balancier est totalement « arrondi ».

Dans un mode de réalisation particulier, le trajet entre deux gares 4 est divisé en une multitude de zones de cheminement 15 qui se succèdent de sorte que la sortie d'une zone de cheminement 15 correspond à l'entrée de la zone de cheminement 15 suivante.

Il est également possible de prévoir que plusieurs zones de cheminement se superposent. Par exemple, la première zone de cheminement est incluse dans la deuxième zone de cheminement. La première et la deuxième zones de cheminement partagent le même capteur détectant l'entrée dans les zone de cheminement. Il est avantageux que plusieurs zones de cheminement possèdent la même entrée ce qui permet d'utiliser un seul capteur pour détecter l'entrée dans les multiples zones de cheminement. Les multiples zones de cheminement possèdent une sortie spécifique qui est associée à un capteur spécifique. De manière préférentielle, la zone d'entrée correspond à une zone d'une station et la zone de sortie correspond à un pylône. Le circuit de contrôle est configuré pour suivre le cheminement des différents véhicules entre une station et les multiples pylônes de l'installation de transport par câble.

Une première variable est définie et comparée à un premier seuil pour détecter une situation à risque dans la première zone de cheminement 15. Une deuxième variable est définie et comparée à un deuxième seuil pour détecter une situation à risque dans la deuxième zone de cheminement 15 hors de la première zone de cheminement. La comparaison de la première variable avec le premier seuil permet de détecter une situation à risque comme indiqué plus haut. La comparaison de la deuxième variable avec le deuxième seuil permet de détecter une situation à risque moins flagrante par exemple un glissement lent du véhicule. Il est particulièrement avantageux de comparer la variable avec le seuil plusieurs fois dans la période de temps qui représente le cheminement théorique du véhicule dans la zone de cheminement.

## Revendications

1. Procédé de contrôle d'une installation de transport par câble, l'installation comprenant au moins un véhicule (3) muni d'une pince (8) attachant le véhicule (3) au câble (2), le procédé comprenant :
- une détection d'une entrée du au moins un véhicule (3) dans une zone de cheminement (15), pour déclencher un calcul d'une variable qui est représentative d'une longueur de défilement du câble (2) depuis ladite détection,
- une comparaison de la variable avec un seuil,
- une émission d'un signal de défaillance (Sd) lorsque la variable a atteint le seuil, **caractérisé en ce que** la pince (8) est fixée au câble (2) pour que le câble (2) tracte le véhicule (3) lors du cheminement du véhicule (3) dans la zone de cheminement (15),
**en ce que** le seuil est un seuil représentatif de la longueur de la zone de cheminement (15), et **en ce que** le procédé comporte une détermination d'une réception d'un événement indiquant une sortie du véhicule (3) de la zone de cheminement (15), et l'émission du signal de défaillance (Sd) si l'événement n'est pas reçu après que la variable a atteint le seuil et/ou comporte la réinitialisation de la variable en réponse à la réception d'un événement indiquant la sortie du véhicule (3) hors de la zone de cheminement (15), la variable n'ayant pas atteint le seuil.

2. Procédé selon la revendication 1, dans lequel l'installation comprend des moyens de mesure (23) configurés pour fournir des impulsions en fonction d'un déplacement du câble (2), et le calcul de la variable est réalisé à partir des impulsions fournies par les moyens de mesure (23).

3. Procédé selon la revendication 1, dans lequel l'installation comprend des moyens de détection (17) aptes à émettre un premier signal (S1) indiquant une entrée du véhicule (3) dans la zone de cheminement (15) et aptes à émettre un deuxième signal (S2) indiquant une sortie du véhicule (3) de la zone de cheminement (15), et l'événement correspond à la réception du deuxième signal (S2).

4. Dispositif de contrôle d'une installation de transport par câble, l'installation comprenant deux gares d'embarquement et de débarquement de passagers dans au moins un véhicule (3) muni d'une pince (8) et destiné à être tracté par le câble (2) entre les deux gares, le dispositif comprenant :
- des moyens de détection (17) configurés pour détecter une entrée du au moins un véhicule (3) dans une zone de cheminement (15) et une sortie dudit au moins un véhicule (3) hors de la zone de cheminement (15),
- des moyens de calcul (18) configurés pour calculer une variable qui est représentative d'une longueur de défilement du câble (2), les moyens de calcul (18) étant configurés pour calculer la variable en réponse à la détection du au moins un véhicule (3), et
- des moyens de comparaison (19) configurés pour comparer la variable avec un seuil,
le dispositif de contrôle étant configuré pour émettre un signal de défaillance (Sd) lorsque la variable atteint le seuil,
**caractérisé en ce que** les moyens de détection (17) sont disposés pour définir une zone de cheminement où le au moins un véhicule (3) est tracté par le câble (2), et **en ce que** le seuil est un seuil représentatif de la longueur de la zone de cheminement (15),
et dans lequel le dispositif de contrôle est configuré pour émettre le signal de défaillance (Sd) si la réception d'un événement indiquant la sortie du véhicule (3) hors de la zone de cheminement (15) n'est pas reçu après que la variable a atteint le seuil et/ou pour réinitialiser la variable en réponse à une réception d'un événement indiquant une sortie du véhicule (3) hors de la zone de cheminement (15), la variable n'ayant pas atteint le seuil.

5. Dispositif selon la revendication 4, comprenant des moyens de mesure (23) configurés pour fournir des impulsions en fonction d'un déplacement du câble (2), et dans lequel les moyens de calcul (18) calculent la variable à partir des impulsions fournies par les moyens de mesure (23).

6. Dispositif selon la revendication 4 ou 5, dans lequel les moyens de détection (17) sont aptes à émettre un premier signal (S1) indiquant une entrée du véhicule (3) dans la zone de cheminement (15) et aptes à émettre un deuxième signal (S2) indiquant une sortie du véhicule (3) de la zone de cheminement (15), et les moyens de détermination (20) comprennent un récepteur (27) des premier et deuxième signaux (S1, S2), et l'événement correspond à la réception du deuxième signal (S2).

7. Dispositif selon l'une des revendications 4 à 6, dans lequel l'installation comporte au moins un pylône (9) configuré pour maintenir le câble (2) au-dessus du sol, le au moins un pylône (9) comportant au moins un balancier (10), la longueur de la zone de cheminement (15) est égale à la longueur du au moins un balancier (10).

8. Dispositif selon l'une des revendications 4 à 7, dans lequel un seul capteur (40) est utilisé par la zone de cheminement et le capteur (40) possède une zone de détection délimitant la zone de cheminement et dans lequel le capteur (40) est configuré de sorte que lorsque le véhicule (3) entre dans la zone de détection (30), le capteur (40) émet le premier signal (S1) indiquant une entrée du véhicule (3) dans la zone de cheminement (15) et lorsque le véhicule (3) sort de la zone de détection (30), le capteur (40) émet le deuxième signal (S2) indiquant une sortie du véhicule (3) de la zone de cheminement (15).

9. Installation de transport par câble, comprenant un câble (2) et un véhicule (3) apte à être tracté par le câble (2), **caractérisée en ce qu'**elle comporte un dispositif de contrôle selon l'une des revendications 4 à 8.

## Patentansprüche

1. Verfahren zur Steuerung einer Seilbahnanlage, wobei die Anlage mindestens ein Fahrzeug (3) umfasst, das mit einer Klemme (8) versehen ist, die das Fahrzeug (3) an das Seil (2) befestigt, wobei das Verfahren umfasst:
- Detektieren eines Eintritts des mindestens einen Fahrzeugs (3) in einen Wegbereich (15), um eine Berechnung einer Variablen auszulösen, die für eine Lauflänge des Seils (2) seit der Detektion repräsentativ ist,
- Vergleichen der Variablen mit einem Schwellenwert,
- Senden eines Fehlersignals (Sd), wenn die Variable den Schwellenwert erreicht hat,
**dadurch gekennzeichnet, dass** die Klemme (8) an das Seil (2) befestigt ist, damit das Seil (2) das Fahrzeug (3) zieht, wenn das Fahrzeug (3) durch den Wegbereich (15) fährt,
dass der Schwellenwert ein Schwellenwert ist, der für die Länge des Wegbereichs (15) repräsentativ ist, und
dass das Verfahren ein Bestimmen eines Empfangs eines Ereignisses, das einen Austritt des Fahrzeugs (3) aus dem Wegbereich (15) anzeigt, und das Senden des Fehlersignals (Sd) umfasst, wenn das Ereignis nicht empfangen wird, nachdem die Variable den Schwellenwert erreicht hat, und/oder in Reaktion auf den Empfang eines Ereignisses, das den Austritt des Fahrzeugs (3) aus dem Wegbereich (15) anzeigt, das Zurücksetzen der Variablen umfasst, wenn die Variable den Schwellenwert nicht erreicht hat.

2. Verfahren nach Anspruch 1, wobei die Anlage Messmittel (23) umfasst, die dazu konfiguriert sind, abhängig von einer Bewegung des Seils (2) Impulse auszugeben, und das Berechnen der Variablen anhand der Impulse erfolgt, die von den Messmitteln (23) ausgegeben werden.

3. Verfahren nach Anspruch 1, wobei die Anlage Detektionsmittel (17) umfasst, die geeignet sind, ein erstes Signal (S1) zu senden, das einen Eintritt des Fahrzeugs (3) in den Wegbereich (15) anzeigt, und geeignet sind, ein zweites Signal (S2) zu senden, das einen Austritt des Fahrzeugs (3) aus dem Wegbereich (15) anzeigt, und das Ereignis dem Empfang des zweiten Signals (S2) entspricht.

4. Vorrichtung zur Steuerung einer Seilbahnanlage, wobei die Anlage zwei Stationen für den Ein- und Ausstieg von Fahrgästen in mindestens ein Fahrzeug (3) umfasst, das mit einer Klemme (8) versehen ist und dazu bestimmt ist, zwischen den zwei Stationen durch das Seil (2) gezogen zu werden, wobei die Vorrichtung umfasst:
- Detektionsmittel (17), die dazu konfiguriert sind, einen Eintritt des mindestens einen Fahrzeugs (3) in einen Wegbereich (15) und einen Austritt dieses mindestens einen Fahrzeugs (3) aus dem Wegbereich (15) zu detektieren,
- Berechnungsmittel (18), die dazu konfiguriert sind, eine Variable zu berechnen, die für eine Lauflänge des Seils (2) repräsentativ ist, wobei die Berechnungsmittel (18) dazu konfiguriert sind, die Variable in Reaktion auf die Detektion des mindestens einen Fahrzeugs (3) zu berechnen, und
- Vergleichsmittel (19), die dazu konfiguriert sind, die Variable mit einem Schwellenwert zu vergleichen,
wobei die Steuervorrichtung dazu konfiguriert ist, ein Fehlersignal (Sd) zu senden, wenn die Variable den Schwellenwert erreicht,
**dadurch gekennzeichnet, dass** die Detektionsmittel (17) angeordnet sind, um einen Wegbereich zu definieren, in dem das mindestens eine Fahrzeug (3) durch das Kabel (2) gezogen wird, und dass der Schwellenwert ein Schwellenwert ist, der für die Länge des Wegbereichs (15) repräsentativ ist,
und wobei die Steuervorrichtung dazu konfiguriert ist, das Fehlersignal (Sd) zu senden, wenn der Empfang eines Ereignisses, das den Austritt des Fahrzeugs (3) aus dem Wegbereich (15) anzeigt, nicht erfolgt, nachdem die Variable den Schwellenwert erreicht hat, und/oder in Reaktion auf den Empfang eines Ereignisses, das einen Austritt des Fahrzeugs (3) aus dem Wegbereich (15) anzeigt, die Variable zurückzusetzen, wenn die Variable den Schwellenwert nicht erreicht hat.

5. Vorrichtung nach Anspruch 4, umfassend Messmittel (23), die dazu konfiguriert sind, abhängig von einer Bewegung des Seils (2) Impulse auszugeben, und wobei die Berechnungsmittel (18) die Variable anhand der Impulse berechnet, die von den Messmitteln (23) ausgegeben werden.

6. Vorrichtung nach Anspruch 4 oder 5, wobei die Detektionsmittel (17) geeignet sind, ein erstes Signal (S1) zu senden, das einen Eintritt des Fahrzeugs (3) in den Wegbereich (15) anzeigt, und geeignet sind, ein zweites Signal (S2) zu senden, das einen Austritt des Fahrzeugs (3) aus dem Wegbereich (15) anzeigt, und die Bestimmungsmittel (20) einen Empfänger (27) für das erste und das zweite Signal (S1, S2) umfassen, und das Ereignis dem Empfang des zweiten Signals (S2) entspricht.

7. Vorrichtung nach einem der Ansprüche 4 bis 6, wobei die Anlage mindestens einen Mast (9) umfasst, der dazu konfiguriert ist, das Seil (2) über dem Boden zu halten, wobei der mindestens eine Mast (9) mindestens ein Pendel (10) umfasst, wobei die Länge des Wegbereichs (15) der Länge des mindestens einen Pendels (10) entspricht.

8. Vorrichtung nach einem der Ansprüche 4 bis 7, wobei ein einziger Sensor (40) durch den Wegbereich verwendet wird und der Sensor (40) einen Detektionsbereich aufweist, der den Wegbereich begrenzt, und wobei der Sensor (40) derart konfiguriert ist, dass der Sensor (40) das erste Signal (S1) sendet, das einen Eintritt des Fahrzeugs (3) in den Wegbereich (15) anzeigt, wenn das Fahrzeug (3) in den Detektionsbereich (30) eintritt, und der Sensor (40) das zweite Signal (S2) sendet, das einen Austritt des Fahrzeugs (3) aus dem Wegbereich (15) anzeigt, wenn das Fahrzeug (3) aus dem Detektionsbereich (30) austritt.

9. Seilbahnanlage, umfassend ein Seil (2) und ein Fahrzeug (3), das geeignet ist, durch das Seil (2) gezogen zu werden, **dadurch gekennzeichnet, dass** sie eine Steuervorrichtung nach einem der Ansprüche 4 bis 8 umfasst.

## Claims

1. Method for monitoring a cableway installation, the cableway installation comprising at least one vehicle (3) provided with a clamp (8) attaching the vehicle (3) to the cable (2), the method comprising:
- detection of entry of the at least one vehicle (3) in a running zone (15) to trigger calculation of a variable that is representative of a running length of the cable (2) starting from said detection,
- comparison of the variable with a threshold,
- transmission of a malfunction signal (Sd) when the variable has reached the threshold,
**characterised in that** the clamp (8) is fixed to the cable (2) so that the cable (2) hauls the vehicle (3) when the at least one vehicle (3) is running in the running zone (15),
**in that** the threshold is a threshold representative of the length of the running zone (15);
and **in that** the method comprises determining receipt of an event indicating exit of the vehicle (3) from the running zone (15), and transmitting the malfunction signal (Sd) if the event is not received after the variable has reached the threshold and/or includes resetting the variable in response to receipt of an event indicating exit of the vehicle (3) from the running zone (15), the variable having not reached the threshold.

2. Method according to claim 1, wherein the installation comprises measuring means (23) configured to provide pulses according to the travel of the cable (2), and calculation of the variable is performed from the pulses provided by the measuring means (23).

3. Method according to claim 1, wherein the installation comprises detection means (17) designed to transmit a first signal (S1) indicating entry of the vehicle (3) in the running zone (15) and designed to transmit a second signal (S2) indicating exit of the vehicle (3) from the running zone (15), and the event corresponds to receipt of the second signal (S2).

4. Monitoring device of a cableway installation, the installation comprising two terminals for passengers to board and alight from at least one vehicle (3) equipped with a clamp (8) and designed to be hauled by the cable (2) between the two terminals, the device comprising:
- detection means (17) configured to detect entry of the at least one vehicle (3) in a running zone (15) and exit of said at least one vehicle (3) from the running zone (15),
- calculating means (18) configured to calculate a variable that is representative of a running length of the cable (2), the calculating means (18) being configured to calculate the variable in response to detection of the at least one vehicle (3), and
- comparison means (19) configured to compare the variable with a threshold, the monitoring device being configured to transmit a malfunction signal (Sd) when the variable reaches the threshold,
**characterised in that** the detection means (17) are arranged to define a running zone where the at least one vehicle (3) is hauled by the cable (2), and **in that** the threshold is a threshold representative of the length of the running zone (15), and wherein the monitoring device is configured to transmit the malfunction signal (Sd) if reception of an event indicating exit of the vehicle (3) from the travel zone (15) is not received after the variable has reached the threshold and/or to reset the variable in response to reception of an event indicating exit of the vehicle (3) from the travel zone (15), the variable having not reached the threshold.

5. Device according to claim 4, comprising measuring means (23) configured to provide pulses according to the travel of the cable (2), and wherein the calculating means (18) calculate the variable from the pulses provided by the measuring means (23).

6. Device according to claim 4 or 5, wherein the detection means (17) are designed to transmit a first signal (S1) indicating entry of the vehicle (3) in the running zone (15) and designed to transmit a second signal (S2) indicating exit of the vehicle (3) from the running zone (15), and the determining means (20) comprise a receiver (27) of the first and second signals (S1, S2), and the event corresponds to receipt of the second signal (S2).

7. Device according to one of claims 4 to 6, wherein the installation comprises at least one tower (9) configured to keep the cable (2) above the ground, the at least one tower (9) comprising at least one girder assembly (10), the length of the running zone (15) being equal to the length of the at least one girder assembly (10).

8. Device according to one of claims 4 and 7, wherein a single sensor (40) is used per the running zone and the sensor (40) has a detection area delimiting the running zone, and wherein the sensor (40) is configured so that when the at least one vehicle (3) enters the detection area (30), the sensor (40) transmits the first signal (S1) indicating entry of the vehicle (3) in the running zone (15), and when the vehicle (3) exits the detection area (30), the sensor (40) transmits the second signal (S2) indicating exit of the at least one vehicle (3) from the running zone (15).

9. Cableway installation comprising a cable (2) and a vehicle (3) designed to be hauled by the cable (2), **characterised in that** it comprises a monitoring device according to one of claims 4 to 8.
